Europäisches Patentamt

European Patent Office

Office européen des brevets

(19)

(11) Publication number: **0 245 102 B1**

(12) **EUROPEAN PATENT SPECIFICATION**

(45) Date of publication of patent specification: **21.11.91**    (51) Int. Cl.5: **D03C 1/14**, F16G 11/12

(21) Application number: **87304086.9**

(22) Date of filing: **07.05.87**

(54) **Jointing apparatus.**

(30) Priority: **07.05.86 JP 105714/86**

(43) Date of publication of application:
**11.11.87 Bulletin 87/46**

(45) Publication of the grant of the patent:
**21.11.91 Bulletin 91/47**

(84) Designated Contracting States:
**BE CH DE FR GB IT LI**

(56) References cited:
**DE-A- 3 533 336**
**DE-A- 3 536 868**
**DE-B- 2 131 671**
**GB-A- 2 011 574**

(73) Proprietor: **YOKOI INDUSTRIES INC.,**
**11-20 Wakae-Honmachi 2-chome**
**Higashi-Osaka City Osaka-fu(JP)**

(72) Inventor: **Junichi, Yokoi**
**11-20 Wakae-Honmachi 2-chome**
**Higashi-Osaka City Osaka-fu(JP)**

(74) Representative: **JENSEN & SON**
**70 Paul Street**
**London EC2A 4NA(GB)**

## Description

The present invention relates to improvements in a jointing device of a wire or cable with a machine element, which is used in a weaving machine or the like.

In a weaving machine, the shedding lever of a Dobby machine is used, for example, to lift the heald frame through the wires so that a predetermined warp which passes through the eye or nail of the heald of the heald frame is lifted to thereby form an opening between the warp thus lifted and the other warp through which the weft extends.

In the weaving machine described and illustrated in German Auslegeschrift DE A 3533336, the machine is provided with the heald frame (5) and a negative type of shedding motion (3) such as a Dobby machine is occasionally used to allow the heald frame (5) to ascend or descend. In this case, in order to connect the heald frame (5) and the shedding motion (3) with each other, the wire ropes (6a, 6b) are extended through the swinging membes (9a, 9b) between the heald frame (5) and the shedding motion (3). For this reason: when the heald frame is required to be adjusted in their reference level, the wire ropes are adjusted in their working length to regulate the level of the heald frame. This adjustment is achieved by turning the adjusting nuts (21) of the swinging members (9a, 9b). That is to say, the adjusting nuts (21) are turned to change the reference position of each swinging member, and as a result, this change in the position of the swinging member is transmitted to the connecting rod (7a, 7b) which connects the swinging member and the heald frame with each other, thereby allowing the heald frame to be altered in its reference level.

The major elements for changing the reference level of the heald frame are the swinging members, the connecting rods, and the adjusting nuts (21) plus the springs (11a, 11b) and these elements are located within the machine frame, namely, the side supports (1a, 1b) and above the heald frame (5). Such an arrangement of the elements in the machine frame differs from that in the conventional weaving machines, and is to allow the levels of the heald frames to be easily surveyed so that the levels of the heald frames, or the length of the wire ropes can easily be adjusted even by a single worker, as referred to in the form of a task of the invention at page 11, line 4 from the bottom to page 12, line 2 of this document.

In German Auslegeschrift DE A 35 33336, as described in page 6, lines 12 to 18 of the specification, it is an object of the invention to provide a connecting element for a heald frame of a weaving machine, in which the level of the heald frame suspended from the connecting wire ropes can easily be adjusted, and the connection between the heald frame and the connecting wire ropes is not allowed to loosen under the influence of vibration which occurs during the operation of the weaving machine.

This publication discloses the nut (27) and the bolt (26), however, this nut has the bolt (36) only brought into abutment therewith to prevent the rotation of the nut. Moreover, it is important that the nut is polygonal in its section, because each vertex (34) of the polygonal nut is used to lock the nut itself. That is to say, if the nut is going to turn, one of its vertices comes into contact with the end of the bolt (26), whereby the nut fails to turn. In connection with this, the bolt (36) itself is considered to loosen in its tightened condition under the influence of the vibration which is caused by the operation of the weaving machine, and allow the rotation of the nut (27).

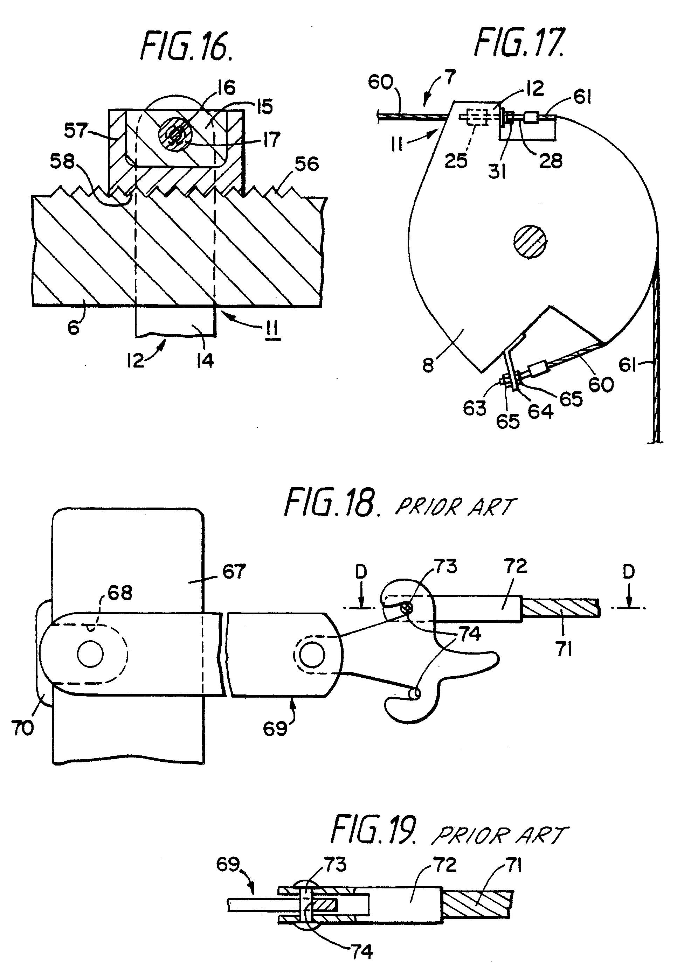

As shown in Figures 18 and 19 of the drawings accompanying the disclosure of the present invention and which illustrate the prior art, in order to connect the wires or cables with the shedding lever of the Dobby machine, the engaging recessed portion 68 of the shedding lever 67 was engaged with the mating portion 70 of the bracket 69, and an end portion of each wire was inserted into and fixed to the base portion of a connector 72. The connecting pins 73 mounted on the end portion of the connector 72 were mated with the engaging notched portions 74 of the bracket 69.

In the conventional wire jointing device of the foregoing construction, however, the swinging movement of the shedding lever 67 causes the connecting pin 73 to turn within and relative to the engaging notched portion 74, and for this reason, the connecting pin 73 easily abrades, and breaks sooner than foreseen. This was a disadvantage of the conventional jointing device of the wires with the shedding lever which is an element of the Dobby machine.

In order to remove this disadvantage of the conventional jointing device, a variety of proposals are made in which, for example, the wires are fixed to the bracket by winding the wire directly into the bracket and securing the wire within the bracket. However, all of such proposals undergo problems in which the jointing device is complicated in construction, and the bracket as well as the wire must be replaced with a new one if the wires are cut or damaged.

It is an object of the present invention to provide an improved jointing device of a wire or cable with machine elements, in which the foregoing disadvantage and problems of the conventional jointing device are removed.

The present invention provides a jointing device for connecting one end of a wire to a machine element, comprising a connecting bolt, a connecting nut and a bracket equipped with two opposed side plates, said bracket being adapted to be connected to said one end of the wire, characterised in that one of either a connecting bolt or a connecting nut is fixed between the two side plates of the bracket and the other one of said connecting bolt or said connecting nut is secured to the wire.

Thus, the machine element is engaged with the insertion member to connect the machine element with the wire or cable through the bracket, to thereby prevent any simple or early breakage of the connection between the wire and the machine element.

In one embodiment of the invention, the jointing device comprises, in combination, an insertion member inserted between end portions of both of the side plates of the bracket, a bushing extending through the middle portion of the insertion member and a supporting shaft fitted into the bushing, characterised in that the insertion member is adapted to engage the machine element so as to connect the machine element with the wire through the bracket.

In another embodiment of the invention, the jointing device is characterised in that the insertion member, which is adapted for direct engagement with the machine element, is made from a material allowing abrasion wear between said member and the machine element engaged therein to be reduced The jointing device of the present invention may also be characterised in that the bushing and the shaft are mutually adapted to retain the shaft within the bushing.

Embodiments of the invention will now be described by way of example and with reference to the accompanying drawings, in which:

Figure 1 is a cross sectional view of the principal portion of the jointing device of a wire or cable to a machine element according to the present invention, showing a first preferred embodiment of the invention.

Figure 2 is a schematic elevational view of the overall arrangement of a weaving machine including a heald frame, the shedding lever of the Dobby machine, and the other elements of the weaving machine, also showing the first preferred embodiment of the present invention.

Figure 3 is an elevational view of the principal portion of the jointing device of the present invention further showing the first preferred embodiment of the invention.

Figure 4 is a plan view of the principal portion of the jointing device of the present invention, also showing the first preferred embodiment of the invention.

Figure 5 and Figure 6 are cross sectional views which are respectively taken along the line A-A and the line B-B of Figure 3.

Figure 7 is an elevational view of the end portion of the bracket applied to the first embodiment of the present invention.

Figure 8 and Figure 9 are cross sectional views of the jointing device of the present invention, respectively showing a second and a third preferred embodiment of the invention.

Figure 10 is a schematic elevational view of a second overall arrangement of a weaving machine, which differs from that shown in Figure 2, showing a fourth preferred embodiment of the present invention.

Figure 11 is an exploded perspective view of the shedding lever and the supporting members both of which are principal components of the actuating device of the heald frame of the weaving machine shown in Figure 10.

Figure 12 is an elevational view of the principal portion of the jointing device as the forth preferred embodiment of the present invention, which includes a partial cross sectional view.

Figure 13 is a cross sectional view taken along the line C-C of Figure 12.

Figure 14 is an elevational view of a modified form of insertion member which is applied to the jointing device of the fourth preferred embodiment of the invention.

Figure 15 is an elevational view of the principal portion of the jointing device which shows a fifth preferred embodiment of the present invention.

Figure 16 is a cross sectional view of the principal portion of the jointing device which shows a sixth preferred embodiment of the present invention.

Figure 17 is an elevational view of the principal portion of the jointing device which shows a seventh preferred embodiment of the present invention.

Figure 18 is an elevational view of the principal portion of a conventional jointing device of the same general type as the present invention, which device is shown as a single example of the prior art.

Figure 19 is a cross sectional view taken along the line D-D of Figure 18.

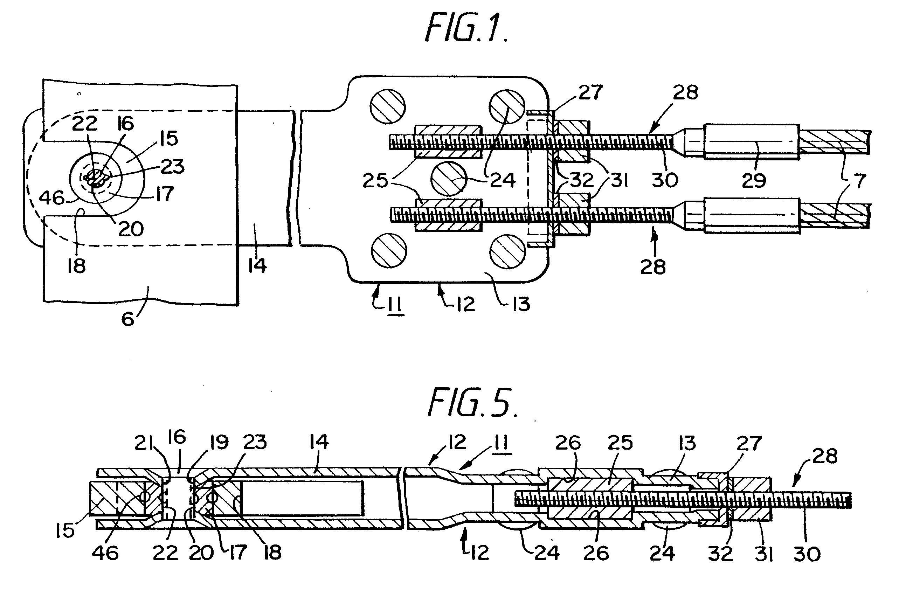

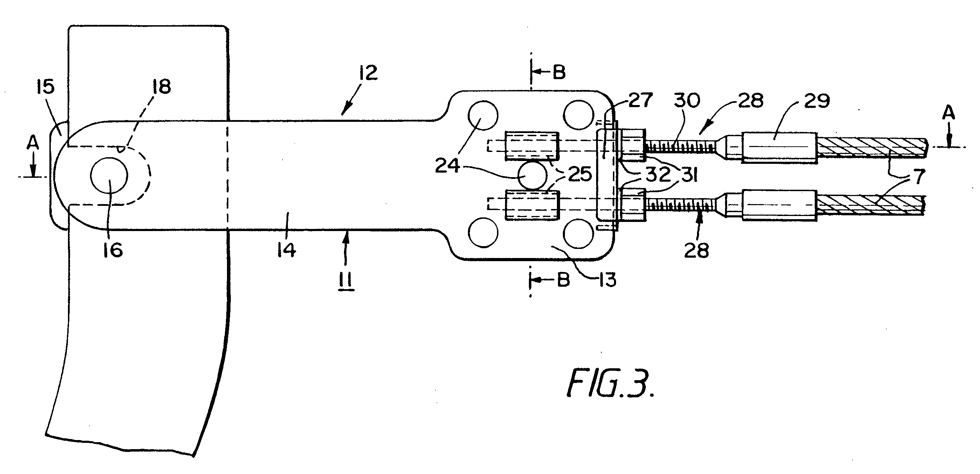

A first preferred embodiment of the present invention will now be described with reference to Figures 1 to 7.

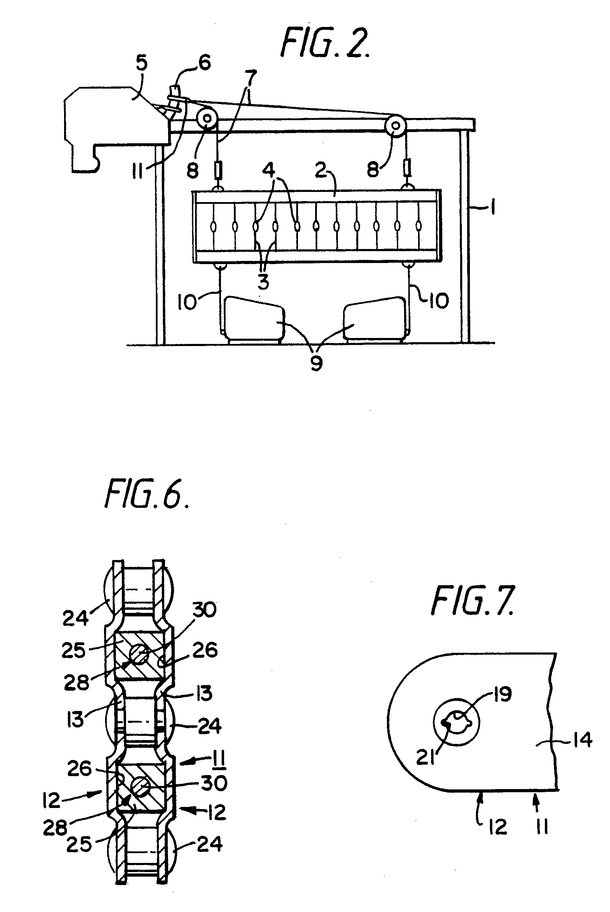

In Figures 2, 1 is the frame of a weaving machine, and 2 is one of a plurality of horizontally disposed heald frames. This heald frame 2 has a great number of healds 3 vertically provided in alignment therein. Each heald 3 is provided with a warp passing eye or mail 4 in its middle portion in the vertical direction.

5 is an actuating device of the weaving machine, which is exemplified as a Dobby machine in this embodiment of the invention. This Dobby machine 5 is mounted on the upper portion of the frame of the weaving machine. In proximity to the actuating device, a great number of shedding levers 6 which swing, horizontally are provided in alignment. Each shedding lever 6 is connected with the right hand side and the left hand side end portion of the upper edge portion of the heald frame through wires 7. Pulleys 8 are provided which guide the wires 7, and are provided on the upper portion of the weaving machine. 9 is a pair of pulling means located on the right hand side and the left hand side position under the heald frame 2 to draw the heald frame downwardly through wires 10.

The connecting manner of the wires 7 to the shedding levers 6 is next described.

In Figure 1 and Figures 3 to 7, 11 is a bracket which is engaged with each shedding lever 6. This bracket is made of sheet metal, and is comprised of a pair of side plates 12. Each side plate 12 is provided with a wire connecting portion 13 of square shape in its base side portion and a supporting portion 14 of rectangular form in its end portion. Both the side plates 12 have an insertion member 15 of a T-shaped configuration pivoted between the end portions of their supporting portions 14 through a supporting shaft 16 and a bushing 17 such that the insertion member 15 can freely be rotated. Moreover, in these two side plates, the end portions of the supporting portions 14 have the shedding lever 6 interposed therebetween, and the shedding lever 6 is engaged in its engaging recessed portion 18 with the insertion member 15 such that the shedding lever can freely be disengaged from or re-engaged with the insertion member 15.

The insertion member 15 is made from a well-known synthetic polyamide fiber, such as Nylon or any other similar material, and the supporting shaft 16 and the bushing 17 are formed from metal, ceramics or the like. The supporting shaft 16 inserted through the bushing 17 is, for example, a rivet or the like, and is expanded or peened over at its ends to fix the bushing to the side plates of the bracket. The supporting shaft hole 19 of the supporting portion 14 and that 20 of the bushing 17 are respectively formed with axial grooves 21 and 22 in their diametrically symmetric places. These grooves are engaged with the protruding portions 23 of the supporting shaft 16, and this eliminates any relative rotary motion of the supporting shaft 16 to the supporting portion 14 of the bushing 17. As a result, any wear or abrasion of the supporting shaft 16 which can be caused by the relative rotary motion of the supporting shaft is prevented. Also, the relative turning movement of the insertion member 15 to the supporting portion 14 of the bracket 11 results from the rotation of the friction-reducing insertion member 15 about the metallic or ceramic bushing 17, and this achieves the prevention of extreme wear or abrasion of the contact surfaces of the shedding lever with the outer circumferential surface of the insertion member 15 or the inside surfaces of the supporting portion 14 of the bracket. Moreover, the inner circumferential surface of the insertion member 15 or the outer circumferential surfaces of the bushing is arranged to be provided with lubrication holes at regular intervals or with a continuous oil groove 46, thereby achieving reduction in wear or abrasion between the insertion member 15 and the bushing 17.

Both the wire connecting portions 13 of both the side plates 12 of the bracket 11 are fixed to each other by means of five fixtures 24 located in each corner portion and the centre of the wire connecting portions 13, which fixtures are exemplified in the form of rivets in this embodiment of the present invention. Also, the wire connecting portions 13 of the side plates 12 have a pair of connecting nuts 25 fixed therebetween in their enlarged or protuberant portions 26. The connecting nuts 25 are furnished with axes in the longitudinal direction of the bracket 11, and are squared in section.

27 is a cover plate formed by bending a sheet metal, and is attached to the end portions of the wire connecting portions 13 of both the side plates 12 of the bracket 11 such that the cover plate can freely be detached from or re-attached to the end portions of the wire connecting portions.

28 are connecting bolts, and each connecting bolt is provided with a cylindrical wire jointing part 29 in its head portion and with a threaded part 30 in its end portion. The cylindrical wire jointing part 29 has the end portion of the wire 7 inserted and fixed therein. The threaded part 30 of the connecting bolt is screwed into the connecting nut 25 through the cover plate 27, and is fixed to the bracket 11 by means of a locking nut 31 so that the connecting bolt can freely be detached from or re-mounted to the bracket. 32 are spring washers.

In operation, according to this embodiment of the present invention, each heald frame 2 is drawn downwardly by the use of the springs of the pulling means 9, and if any desired one of the shedding levers 6 of the actuating device is moved in the left hand side direction, the heald frame 2 which corresponds to the shedding lever thus moved is lifted through the insertion member 15, the bracket 11, and the wire 7. As a result, the warps passing through the eyes or mails 4 of the healds 3 of the heald frame 2 are also lifted, and openings are made between such warps and the other warps, whereby wefts are inserted through the openings thus formed.

The tension adjustment of each wire 7 is easily feasible by the simple operation in which the locking nut 31 is loosened, and the connecting bolt 28 is screwed additionally into or out of the connecting nut 25 to any desired amount, and thereafter, the locking nut 31 is tightened.

Also, the replacement of each wire 7 with a new one is readily practicable. That is to say, in order to substitute each wire for a new one, the locking nut 31 is loosened, the connecting bolt 28 is detached from the connecting nut 25, a new wire is secured to the connecting bolt 28, and this connecting bolt is screwed into the connecting nut 25. Thereafter, the locking nut is only required to be tightened. In connection with this, it is to be noted that in the jointing device for a wire or cable according to the present invention, the wire replacement has no need for the bracket 11 to be simultaneously replaced with a new one.

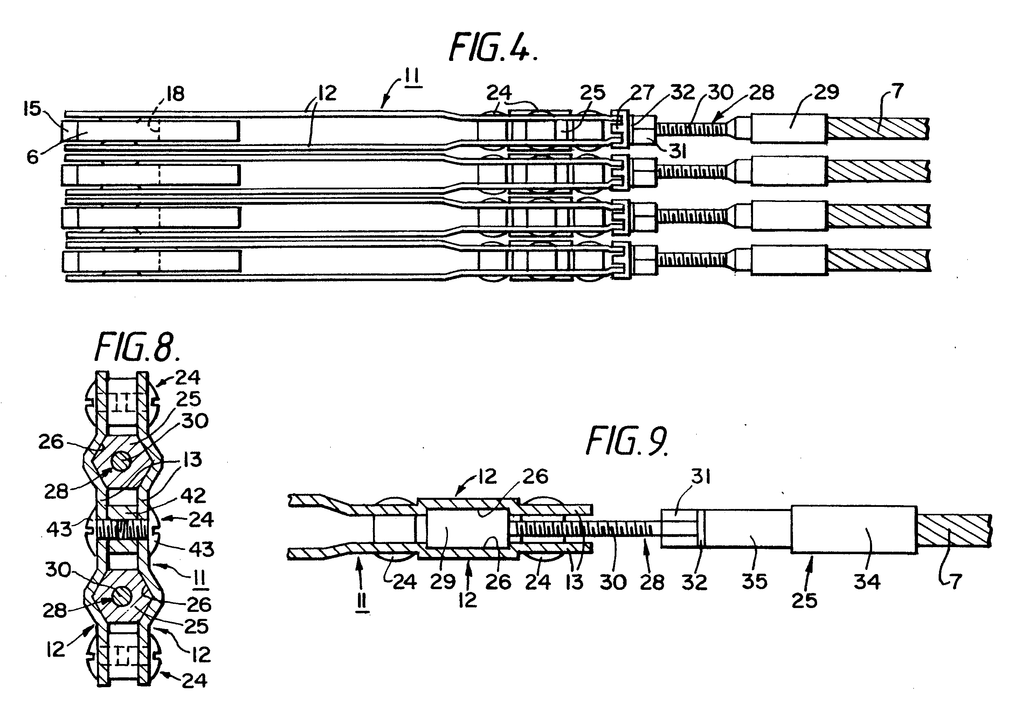

Figure 8 illustrates a second preferred embodiment of the present invention. In this second embodiment of the invention, the connecting nut 25 is formed so as to be an equilateral hexagon in section, while at the same time, the protuberant portions 26 of the wire connecting portion 13 are shaped in a V-formed configuration. Moreover, the fixtures 24 are respectively comprised of a pair of screws 43 which are detachably screwed into a stem 42 located between both the side plates 12, whereby the connecting nuts 25 can easily be detached from or re-attached to the bracket 11.

In Figure 9 which shows a third preferred embodiment of the present invention, the connecting bolt 28 is fixed to the bracket 11, and the connecting nut 25 located between the side plates 11 in the first and the second preferred embodiment of the invention is secured to the wire 7. This connecting nut 25 in the third preferred embodiment of invention is comprised of a nut portion 35 and a cylindrical wire connecting portion 34 in which the end portion of the wire 7 is fixed. Also, in this third preferred embodiment of the invention, the cylindrical wire jointing part 29 shown and described in the first and the second preferred embodiment of the invention is formed as a solid body, and is fixed between the wire connecting portions 13 of both the side plates 12 of the bracket 11.

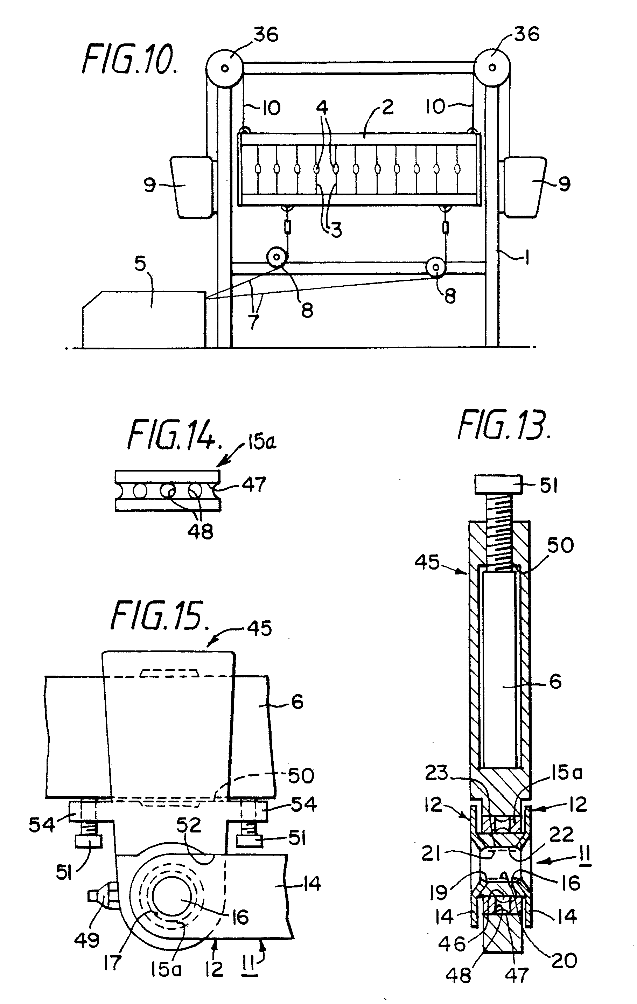

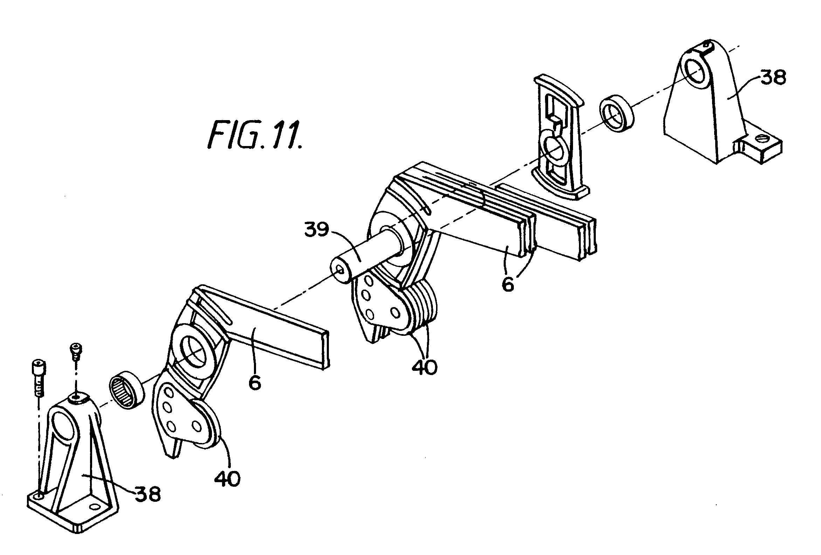

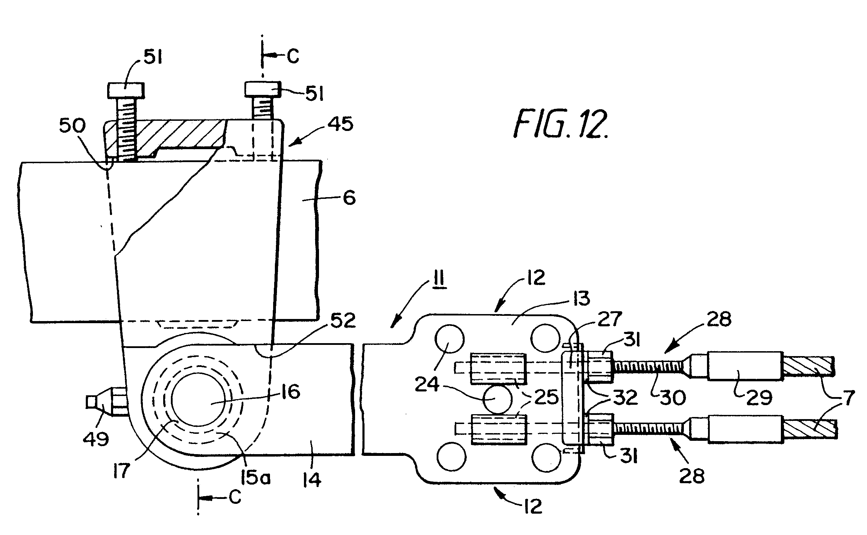

A fourth preferred embodiment of the present invention is depicted in Figures 10 to 14. Figure 10 shows a weaving machine of different arrangement from that illustrated in Figure 2. That is to say, the actuating device 5 of Figure 2 is located in the upper portion of the weaving machine frame, while on the other hand, the actuating device 5 in this fourth preferred embodiment of the invention is mounted on a lower side of the weaving machine frame. Moreover, in the fourth preferred embodiment of the invention, the actuating device is formed of a cam mechanism. Also the pulling means 9 are located on both outer sides of the weaving machine frame, and are connected with the heald frame 2 through pulleys 36 by using connecting wires. With such an arrangement, each heald frame 2 is lowered by means of the cam mechanism 5, and is lifted by using the spring operation of the pulling means 8.

As illustrated in Figure 11, the cam mechanism is provided with a pair of supporting members 38, and a holding shaft 39 is located between these supporting members 38. The holding shaft 39 is fitted with a plurality of V-shaped shedding levers 6 in alignment such that every two levers 6 are in proximity to each other, and that the shedding levers can all be freely rotated about the holding shaft 39. The shedding levers 6 are provided with rollers 40 in their lower portions so as to allow the free rotary operation of the rollers 40. The cam surface of the actuating device 5 is brought into contact with the rollers 40, and as a result the rotating motion of the cam of the actuating device 5 causes the shedding levers to be swung at regular intervals of time.

As shown in Figure 12, the bracket 11 has an attachment member 45 pivoted to its end portion by using the supporting shaft 16, the bushing 17 and an insertion member 15a which is a modified form of the insertion member 15 employed in the first preferred embodiment of the present invention. The pivotal connection between bite end portion of the bracket 11 and the attachment member 45 is such that this attachment member 45 can freely be turned about its base portion. The modified insertion member 15a is formed with a circumferential oil groove 47 in its axial middle portion and also with a plurality of diametrical oil holes 48 circumferentially location at regular intervals. The oil holes 48 extend through the wall of the insertion member 45 to the bushing 17, and as a result, if the oil groove 47 is supplied with a lubricant by means of a grease nipple 49, the lubricant can reach the outer circumferential surface of the bushing 17, thereby reducing wear or abrasion between the insertion member a and the bushing 17.

The attachment member 45 is mounted on the bracket 12 so as to be located perpendicularly to the bracket 12. This attachment member has an insertion opening 50 formed through its upper portion to allow the upper portion of the shedding lever 6 to be inserted into the attachment member such that the upper portion of the shedding lever can freely be extracted from or re-inserted into the attachment member. At the same time, the attachment member 45 has a pair of fixing bolts 51 screwed into its end portion such that the fixing bolts can freely be detached from or re-attached thereto, thereby allowing the shedding lever 6 to be fixed to the inside of the attachment member 45. Moreover, the attachment member 45 is formed with an outwardly protruded surface 52 in its base portion, and this protruded surface 52 is brought into contact with the upper surface of the bracket 11. If the upper portion of the shedding lever 6 is swung downwardly, the attachment member 45 depresses the bracket 11 through the protruded surface 52.

Figure 15 shows a fifth preferred embodiment of the present invention, and in this fifth embodiment of the invention, a pair of projecting seats 54 which have the fixing bolts 51 screwed into them are formed on the lower side portion of the attachment member 45. With such arrangement, the shedding lever 6 inserted in the attachment member 45 is fixed to the attachment member 45 as in the preceding fourth embodiment of the invention.

Figure 16 depicts a sixth preferred embodiment of the present invention. The shedding lever 6 is provided with a corrugated surface 56 in the upper surface of its upper portion. In Figure 16, the bracket 11 is located perpendicularly to the shedding lever 6, and the upper side portion of the shedding lever 6 is inserted between the supporting portions 14 of both the side plates 12 of the bracket 11 such that the shedding lever can freely be detached from or re-inserted into the supporting portions 14. Also, the insertion member 15 is formed in a rectangular configuration, and a U-shaped adjusting piece 57 is slipped onto the rectangular insertion member 15 such as to allow the adjusting piece to be freely detached from or re-attached to the insertion member 15. The adjusting piece 57 is also formed with a serrated surface 58 which is engaged with any desired portion of the corrugated surface 56 of the shedding lever 6 such that the disengagement of both surfaces 56 and 58 from each other or the re-engagement of these surfaces with each other can freely be carried out.

Figure 17 shows a seventh preferred embodiment of the present invention. The wire 7 used in the foregoing other preferred embodiments of the invention is separated into two wires in this seventh preferred embodiment of the invention. One of these two wires is the first wire 60 which is connected at one end to the shedding lever, and the other wire is the second wire 61 one end of which is joined to the heald frame 2. The end portion of the first wire 60 has an adjusting bolt 63 secured thereto, and is wound around the outer circumferential surface of each pulley 8.

The pulley 8 is fitted with a bolt bracket 64 through which the adjusting bolt 63 of the first wire portion 60 is inserted, and a pair of nuts 65 screwed to the adjusting bolt 63 hold the bolt bracket 64 between them, thereby allowing the first wire 60 to be fixed on the pulley 8. The other end portion of the second wire 61 is partially wound around the pulley 8.

The connecting portion between the pulley and the heald frame side portion of this second wire portion 61 has the present invention also applied thereto.

That is to say, the upper portion of the pulley 8 is formed with the bracket 11 such that the pulley and the bracket are integrated into a single unit. Both the side plates 12 of the bracket have the connecting nut 25 fixed therebetween.

On the other hand, the second wire 61 has a connecting bolt 28 fixed on its heald frame side portion, which bolt 28 is screwed in the connecting nut 25. The locking nut 31 is secured to this connecting bolt 28.

The foregoing several preferred embodiments of the present invention are all based on the presumption that the jointing device of the invention is used in a weaving machine. However, it will be readily understood that the present invention can be widely applied to any other machine or equipment in which wires or cables are connected to their related elements.

As is apparent from the foregoing detailed description, according to the present invention, one of the connecting bolt and the connecting nut which is engaged with this connecting bolt is fixed between both the side plates of the bracket, and the other is secured to the wire or cable, while at the same time, the machine element is engaged with the insertion member inserted in the end portions of both the side plates of the bracket to connect the machine element with the wire or cable through the bracket. The creation and use of this arrangement has not been made in the conventional similar jointing devices, especially for weaving machines in particular. It is particularly to be noted that this arrangement is free from any risks that the connected part of the bracket with the wire or cable breaks as early as the conventional jointing device or that the connection between the bracket and the shedding lever is readily disconnected, as in the conventional jointing device as a result of wear or abrasion between the bracket and the shedding lever which is caused by the high-speed motion of the shedding lever. Also, in this arrangement of the present invention, the tension of the wire or cable can easily be adjusted and also, can readily be replaced with a new one. Moreover, the replacement of the wire or cable with a new one does not necessitate any simultaneous substitution of the bracket for a new one although by reason of the constructional disadvantage, the conventional jointing device of a similar kind to that of the present invention indispensably necessitated the replacement of the bracket itself with a new one at the same time when the wire or cable is renewed.

As compared with the conventional jointing device of the same kind as the present invention, the jointing device of the present invention is very simple in construction as depicted and described in the foregoing with reference to the several preferred embodiments of the invention, and is furnished with the advantageous effects as described above. Therefore, it is to be understood that the present invention is not limited in its application to weaving machines, and is widely applicable to many other machines or equipment, such as the oil-hydraulic systems of aircraft, the braking systems of automobiles, motor cycles and bicycles, and the like in which wires or cables are to be connected with their elements.

## Claims

1. A jointing device for connecting one end of a wire (7) to a machine element (6), comprising a connecting bolt (28), a connecting nut (25) and a bracket (11) equipped with two opposed side plates (12), said bracket (11) being adapted to be connected to said one end of the wire (7), characterised in that one of either a connecting bolt (28) or a connecting nut (25) is fixed between the two side plates (12) of the bracket (11) and the other one of said connecting bolt (28) or said connecting nut (25) is secured to the wire (7).

2. A jointing device as set forth in claim 1, also comprising, in combination, an insertion member (15) inserted between end portions of both of the side plates (12) of the bracket (11), a bushing (17) extending through the middle portion of the insertion member (15) and a supporting shaft (16) fitted into the bushing (17), and characterised in that the insertion member (15) is adapted to engage the machine element (6) so as to connect the machine element (6) with the wire (7) through the bracket (11).

3. A jointing device as set forth in claim 1 or claim 2, characterised in that the insertion member (15), which is adapted for direct engagement with the machine element (6), is made from a material allowing abrasion wear between said member (15) and the machine element (6) engaged therein to be reduced.

4. A jointing device as set forth in claim 3, characterised in that the bushing (17) and the shaft (16) are mutually adapted to retain the shaft (16) within the bushing (17).

## Revendications

1. Dispositif de liaison destiné à raccorder une première extrémité d'un câble (7) à un élément de machine (6), comprenant un boulon (28) de raccordement, un écrou (25) de raccordement et une équerre (11) ayant deux plaques latérales opposées (12), l'équerre (11) étant destinée à être raccordée à la première extrémité du câble (7), caractérisé en ce que le boulon (28) ou l'écrou (25) de raccordement est fixé entre les deux plaques latérales (12) de l'équerre (11), et l'écrou (25) ou le boulon (28) de raccordement respectivement est fixé au câble (7).

2. Dispositif de liaison selon la revendication 1, comprenant en outre, en combinaison, un organe d'introduction (15) introduit entre les parties d'extrémité des deux plaques latérales (12) de l'équerre (11), un manchon (17) disposé dans la partie médiane de l'organe (15) d'introduction et un arbre de support (16) placé dans le manchon (17), caractérisé en ce que l'organe d'introduction (15) est destiné à coopérer avec l'élément de machine (6) afin qu'il raccorde l'élément de machine (6) au câble (7) par l'intermédiaire de l'équerre (11).

3. Dispositif de liaison selon la revendication 1 ou 2, caractérisé en ce que l'organe d'introduction (15) qui est destiné à coopérer directement avec l'élément de machine (6) est formé d'un matériau permettant une réduction de l'usure par abrasion entre ledit organe (15) et l'élément de machine (6) qui coopère avec lui.

4. Dispositif de liaison selon la revendication 3, caractérisé en ce que le manchon (17) et l'arbre (16) sont destinés à retenir mutuellement l'arbre (16) dans le manchon (17).

## Patentansprüche

1. Verbindungselement zum Anschließen eines Endes eines Drahtes (7) an ein Maschinenteil (6) mit einem Verbindungsbolzen (28), einer Verbindungsmutter (25) und einem Arm (11), der mit zwei gegenüberliegenden Seitenplatten (12) ausgerüstet ist, wobei dieser Arm (11) geeignet ist, mit einem Ende des Drahtes (7) verbunden zu werden, dadurch gekennzeichnet, daß entweder ein Verbindungsbolzen (28) oder eine Verbindungsmutter (25) zwischen den beiden Seitenplatten (12) des Armes (11) fest gehalten und der jeweils zugeordnete Verbindungsbolzen (28) oder die Verbindungsmutter (25) am Draht (7) befestigt ist.

2. Verbindungselement nach Anspruch 1, welches zusätzlich einen Einsatz (15) besitzt, der zwischen den Endteilen der beiden Seitenplatten (12) des Armes (11) eingesetzt ist und bei dem sich eine Buchse (17) durch die Mitte dieses Einsatzes (15) erstreckt und eine Tragachse (16) in der Buchse (17) sitzt sowie dadurch gekennzeichnet, daß der Einsatz (15) geeignet ist, um mit dem Maschinenteil (6) in Eingriff zu kommen, um dadurch das Maschinenelement (6) über den Arm (11) mit dem Draht (7) zu verbinden.

3.  Verbindungselement nach Anspruch 1 oder 2, dadurch gekennzeichnet, daß der Einsatz (15), der zu einem unmittelbaren Eingriff mit dem Maschinenteil (6) geeignet ist, aus einem Material besteht, das einen geringeren Reibungsverschleiß zwischen dem Teil (15) und dem Maschinenteil (16) erlaubt.

4.  Verbindungselement nach Anspruch 3, dadurch gekennzeichnet, daß die Buchse (17) und die Tragachse (16) aneinanderangepaßt sind, um die Achse (16) innerhalb der Buchse (17) zu halten.

EP 0 245 102 B1

## FIG.1.

## FIG.5.

# FIG.2.

# FIG.6.

# FIG.7.

FIG.3.

*FIG.4.*

*FIG.8.*

*FIG.9.*

EP 0 245 102 B1

FIG.10.

FIG.14. 15a
47
48

FIG.13.
51
45
50
6
23
15a
12
12
21
22
11
19
16
14
14
46
48
47
20

FIG.15. 45
6
50
54
54
52
51
51
49
17
15a
12
11
16
14

FIG.11.

EP 0 245 102 B1

FIG.12.

## FIG.16.

## FIG.17.

## FIG.18. PRIOR ART

## FIG.19. PRIOR ART